# EUROPÄISCHE PATENTSCHRIFT

(11) **EP 0 879 368 B1**
(45) Veröffentlichungstag und Bekanntmachung des Hinweises auf die Patenterteilung: **07.06.2000**
(21) Anmeldenummer: 97903223.2
(22) Anmeldetag: 06.02.1997
(51) Int. Cl.: F16H 1/28, F16H 57/02

(54) **PLANETENGETRIEBE IN SCHRÄGVERZAHNTER BAUWEISE**
PlANETARY GEARBOX WITH HELICAL TEETH
BOITE PLANETAIRE A DENTURE HELICOIDALE

(30) Priorität: 12.02.1996 DE 19604824
(43) Veröffentlichungstag der Anmeldung: 25.11.1998
(73) Patentinhaber: ZF FRIEDRICHSHAFEN Aktiengesellschaft, 88038 Friedrichshafen (DE)
(72) Erfinder: FÜHRER, Gerhard, D-88048 Friedrichshafen (DE)
(86) Internationale Anmeldenummer: EP9700526
(87) Internationale Veröffentlichungsnummer: WO9730300

(56) Entgegenhaltungen:
- DE-A- 3 531 472
- DE-A- 4 009 968
- FR-A- 1 377 507
- FR-A- 2 363 739
- FR-A- 2 588 344
- PATENT ABSTRACTS OF JAPAN vol. 096, no. 003, 29.März 1996 & JP 07 301306 A (TOYOTA MOTOR CORP;OTHERS: 01), 14.November 1995,
- PATENT ABSTRACTS OF JAPAN vol. 095, no. 005, 30.Juni 1995 & JP 07 042797 A (ISHIKAWAJIMA HARIMA HEAVY IND CO LTD), 10.Februar 1995,

## Beschreibung

Die Erfindung betrifft ein Planetengetriebe in schrägverzahnter Bauweise, insbesondere für Kraftfahrzeuge, mit einem mit einer Antriebswelle drehfest verbindbaren Sonnenrad, mehreren in einem Planetenträger gelagerten Planetenrädern und einem die Planetenräder umschließenden Hohlrad, das mit einem Hohlradträger verbunden ist.

Der Einsatz von Planetengetrieben im Kraftfahrzeugbau ist bereits allgemein bekannt. Schrägverzahnte Planetengetriebe besitzen im Vergleich zu geradverzahnten Getrieben eine deutlich höhere Laufruhe, was im Hinblick auf die zunehmend verschärften Lärmschutzverordnungen immer mehr an Bedeutung gewinnt.

Problematisch bei schrägverzahnten Planetengetrieben ist jedoch zum einen deren aufwendige Herstellung und Montage und zum anderen die Beherrschung der hohen Axialkräfte aufgrund der Schrägverzahnung. Diese Axialkräfte belasten benachbarte Bauteile, wie die Antriebswelle und die Abtriebswelle, sehr stark. Auf die Planetenräder wirken dabei darüber hinaus auch sehr hohe Kippmomente, was die Radiallager hoch belastet. Infolge der freien Axialkräfte aus der Verzahnung können keine beliebig großen Schrägungswinkel vorgesehen werden, da die Kräfte auf die erforderlichen Axiallager sonst zu groß werden. Üblicherweise bewegen sich die Schrägungswinkel bei Einfachschrägverzahnungen zwischen 10 - 15°. Notwendige Axiallagerungen bewirken erhöhte Lagerverluste und schlechteren Wirkungsgrad.

Aus der DE-PS 401652 ist ein Stirnrädergetriebe mit einer Einfachschrägverzahnung bekannt, bei der zur Aufnahme des Axialschubes ein mitumlaufender Druckring vorgesehen ist. Vorgesehen sind unterschiedliche Ausgestaltungen des Druckringes, der einmal so ausgelegt ist, daß er Axialschübe nur in einer Richtung aufnimmt, oder aber durch Anordnung von zwei entgegengesetzten Druckflächen an einem Ring Axialschübe in beide Richtungen aufnehmen kann. Auftretende Stöße lassen sich durch elastische Elemente zwischen Druckring und Zahnrad abfedern, beispielsweise durch federnde Ausbildung der Druckringe oder durch elastische Zwischenelemente.

Als Methoden der Anbringung von Druckringen sind beispielsweise aus der DE-PS 28 15 847 folgende Methoden bekannt:
1. Der Druckring wird stirnseitig angeschraubt. Diese Befestigungsart ist nur bei Getrieben mit verhältnismäßig großem Ritzel (kleines Übersetzungsverhältnis) möglich, da der nach innen reichende Flansch des Druckringes zusätzlichen Raum beansprucht.
2. Der Druckring ist aufgeschrumpft, ohne zusätzliche Sicherung gegen axiales Verschieben. Diese Befestigungsart erfordert für eine ausreichende Sicherheit gegen Rutschen neben großen Schrumpfpressungen auch große Schrumpfringbreiten. In besonderem Maße trifft das bei hohen Drehzahlen zu durch die dabei entstehenden Verminderungen der Pressung als Folge der Ringaufweitung. Große Druckringbreiten ergeben aber nachteilige Vergrößerungen der Radsatz- und Getriebebreiten.
3. Der Druckring sitzt mit Schrumpfsitz auf der Welle. Zusätzlich wird er jedoch durch einen geteilten Ring und einen Haltering gesichert. Diese zusätzliche Sicherung soll vor allem vorbeugend wirkend gegen die Unsicherheit der Schrumpfverbindung und gegen die ungünstige Beanspruchung des Druckringes bei Stirnrädergetrieben durch den exzentrischen Kraftangriff des Axialschubes. Als Sicherungselemente werden hauptsächlich Muttern, Sicherungsringe, zweiteilige Einlegeringe mit zusätzlichem Haltering und radiale Stifte sowie Schrauben verwendet. Neben dem Nachteil eines konstruktiv aufwendigen Aufbaus haben Erfahrungen mit aufgeschraubten Druckringen ergeben, daß es notwendig ist, die Feinbearbeitung (Schleifen) der Druckring-Anlaufflächen erst nach dem Aufschrumpfen durchzuführen, da sonst durch das festgestellte Verkanten des Druckringes beim Schrumpfprozeß ein schlagfreier Lauf der Druckflächen nicht gewährleistet ist. Diese Forderung benachteiligt technisch und preislich die Herstellung.
4. Der Druckring sitzt mit einer Übergangs- oder leichten Preßpassung auf der Welle und wird mit der Welle durch Elektronenstrahlschweißen zu einer einstückigen homogenen Einheit verbunden.

Aus der DE-OS 42 16 397 ist schließlich ein Planetengetriebe in schrägverzahnter Bauweise insbesondere für Kraftfahrzeuge bekannt, das mit einem mit einer Antriebswelle drehfest verbindbaren Sonnenrad, mehreren in einem Planetenträger gelagerten Planetenrädern und einem die Planetenräder umschließenden Hohlrad, das mit einem Hohlradträger verbunden ist, versehen ist. Zur Axialkraftaufnahme sind Druckringe zwischen dem Sonnenrad und den Planetenrädern und zwischen den Planetenrädern und dem Hohlrad vorgesehen, die an den Stirnseiten der jeweiligen Zahnräder angeordnet sind. Die Druckringe sind beidseitig der Planetenräder angeordnet, um sowohl in Zug- als auch in Schubrichtung die Axialkräfte aufnehmen zu können.

Schließlich ist noch aus der gattungsgemäßen FR-A-2 588 344 ein Planetengetriebe mit Schrägverzahnung bekannt, das eine an einer Antriebswelle angeordnete Sonnenradverzahnung, mehrere in einem Planetenträger gelagerte Planetenräder und ein die Planetenräder umschließendes Hohlrad aufweist, das mit einem Hohlradträger verbunden ist. Zwischen der Antriebswelle und den Planetenrädern und zwischen den Planetenrädern und dem Hohlrad sind Druckringe vorgesehen.

Wird bei einem Getriebe die Hauptwelle derart ausgestaltet, daß das Sonnenrad des Planetengetriebes direkt von einer Verzahnung auf der Antriebswelle des Planetengetriebes, beispielsweise der Hauptwelle eines vorgeschalteten mehrstufigen Hauptgetriebes gebildet wird, so ergibt sich die Schwierigkeit, den äußeren Druckring am Ende der Hauptwelle an der Hauptwelle zu befestigen. Eine derartige mit Sonnenradverzahnung ausgestaltete Hauptwelle wird im Folgenden als Antriebswelle bezeichnet.

Der vorliegenden Erfindung liegt die Aufgabe zugrunde, die vorstehend beschriebenen Probleme bei einem Planetengetriebe in schrägverzahnter Bauweise zu beherrschen, insbesondere ein Planetengetriebe zu schaffen, das mit geringem Aufwand und leichterer Montage herstellbar ist.

Die Aufgabe wird gelöst durch ein Planetengetriebe mit den Merkmalen des Anspruchs 1.

Ausgestaltungen sind Gegenstand von Unteransprüchen.

Erfindungsgemäß wird vorgeschlagen, bei der Montage des Planetengetriebes auf das Ende der Antriebswelle eine Vorrichtung zwischen dem Ende der Antriebswelle und dem Planetenträger bzw. der Abtriebswelle des Planetengetriebes vorzusehen. Über diese Vorrichtung wird die Axialkraft des schrägverzahnten Planetengetriebes von dem dem Planetenträger zugewandten Druckring am Sonnenrad auf die Antriebswelle übertragen. Diese Vorrichtung besteht aus einem im Durchmesser veränderbaren, elastischen Stütz- oder Sprengring, der an einem Deckel innerhalb des Planetenträgers angeordnet ist. Der Deckel stützt sich axial am Planetenträger ab. Der im Durchmesser veränderbare Sprengring greift in eine an der Antriebswelle vorgesehene Vertiefung im montierten Zustand ein.

In einer vorteilhaften Ausgestaltung weist der Deckel und der Sprengring schräge Flächen auf, über die bei der Montage eine Durchmesserreduzierung des Sprengrings erzielbar ist. Weiterhin sind vorteilhafterweise an der Vertiefung der Antriebswelle und an dem Sprengring Kraftaufnahmeflächen vorgesehen, über die die Axialkräfte übertragbar sind. Diese Kraftaufnahmeflächen können konisch sein.

Zwischen Deckel und Planetenträger kann eine Axiallagerung zum Ausgleich von Relativdrehzahlen zwischen der Antriebswelle und dem Planetenträger vorgesehen sein. Dabei können dann zwischen Deckel und Axiallagerung einerseits und zwischen Axiallagerung und Planetenträger andererseits elastische Elemente, beispielsweise Tellerfedern, angeordnet sein zum Ausgleich der Axialbewegung des Planetenträgers.

Durch die vorgesehenen Druckringe können die auftretenden Axialkräfte direkt am Entstehungsort gebunden werden. Auf diese Weise wirken die Axialkräfte weder auf das Sonnenrad noch auf die Planetenräder, da, je nach Schrägstellungsrichtung der Verzahnung, die Axialkraft stets von einem der beiden Druckringe aufgenommen wird. Damit stellen die Axialkräfte innere Kräfte dar, die nicht auf das Bauteil wirken.

Durch die Druckringe sind somit Lagerungen wie bei einem geradverzahnten Planetengetriebe möglich.

An beiden Stirnseiten des Sonnenrades können Druckringe derart angeordnet sein, daß diese mit Bereichen, die Anlaufflächen bilden, bis in die Radkörper der Planetenräder ragen. Auf diese Weise liegen die Anlaufflächen radial innen, bezogen auf den Wälzkreis der Planetenräder. Die auftretende Geschwindigkeitsdifferenz ist dabei jedoch relativ gering, insbesondere, je näher die Anlauffläche am Wälzkreis liegt.

Bei der vorstehend beschriebenen Ausgestaltung sind insgesamt nur vier Druckringe notwendig. Dabei kann vorgesehen sein, daß ein Druckring an dem Hohlrad auf der von dem Hohlradträger abgewandten Seite angeordnet ist, während auf der anderen Seite der Druckring durch eine in den Hohlradträger integrierte Anlauffläche gebildet ist.

Auf diese Weise übernimmt der Hohlradträger zusätzlich noch die Funktion eines Druckringes, wobei in diesem Falle die auftretenden Axialkräfte weder auf das Sonnenrad noch auf die Planetenräder wirken, da, wie erwähnt, je nach Schrägstellungsrichtung der Verzahnung die auftretende Axialkraft links oder rechts jeweils von der entsprechenden Anlauffläche aufgenommen wird. Auf diese Weise sind die Bauteile entlastet und es kann nicht zu Axialverschiebungen kommen.

In einer vorteilhaften Ausgestaltung kann vorgesehen sein, daß die Anlaufflächen der Druckringe ballig oder konisch sind, wobei der Konuswinkel zwischen einem und sechs Grad betragen kann. Durch diese Ausgestaltung kann sich zwischen den Anlaufflächen ein Schmierfilm aufbauen, wodurch bei einem Anlaufen nur sehr geringe Reibungskräfte auftreten. Die Verbindung der Druckringe mit dem dazugehörigen Laufrad kann durch mechanische Verbindungsglieder oder in einer einfachen Ausgestaltung durch ein Aufschweißen erfolgen. Eine vorteilhafte konstruktive Lösung für das Hohlrad kann dabei darin bestehen, daß der Druckring des Hohlrades, der auf der von dem Hohlradträger abgewandten Seite angeordnet ist, auf das Hohlrad aufgesteckt ist. Das Aufstecken kann dabei dadurch erfolgen, daß die Innenverzahnung des Hohlrades außenseitig eine höhere Stufe besitzt, an der der Druckring axial anliegt. Die Stufe der Innenverzahnung des Hohlrades bildet dabei außenseitig eine Anschlagfläche für den Druckring und legt diesen damit axial fest. Für eine Verdrehsicherung des Druckringes auf dem Hohlrad kann vorgesehen sein, daß dieser mit einer der Innenverzahnung des Hohlrades entsprechenden Verzahnung versehen ist.

Durch diese Ausgestaltung läßt sich der Druckring auf einfache Weise, vergleichbar mit einer Kuppel- oder Keilwellenverzahnung, von der Seite her in die Verzahnung einschieben.

Das Hohlrad ist im allgemeinen über eine Kuppelverzahnung auf einen Hohlradträger aufgeschoben, wobei auf einer Seite ein Sicherungsring für eine axiale Fixierung sorgt. Der Sicherungsring befindet sich dabei im allgemeinen auf der Seite des Hohlradträgers.

Auf der anderen Seite kann ein Druckring die axiale Sicherung bilden. Da der Druckring deutlich stabiler ausgebildet ist, insbesondere, wenn er mit dem Hohlrad verschweißt ist, oder wenn er an einer genügend stabilen Stufe in der Verzahnung des Hohlrades anliegt, kann er entsprechend auch deutlich höhere Axialkräfte übertragen. Aus diesem Grunde wählt man die Schrägverzahnungsrichtung in vorteilhafter Weise so, daß die im Betrieb auftretenden höheren Belastungskräfte von diesem Druckring aufgenommen werden können.

Bei einem Einbau des Planetengetriebes in einem Kraftfahrzeug wird man deshalb die Schrägverzahnung so wählen, daß bei Zugbelastung die Axialkräfte in Richtung auf diesen Druckring hin gerichtet sind. Bei den üblichen rechtsdrehenden Motoren bedeutet dies eine Schrägungsrichtung mit Rechtsverzahnung für das Hohlrad.

Nachfolgend ist ein Ausführungsbeispiel der Erfindung anhand von Zeichnungen prinzipmäßig dargestellt. Es zeigt:
- Fig. 1: einen Schnitt durch das erfindungsgemäße Planetengetriebe in fertig montiertem Zustand;
- Fig. 2: eine Ausschnittsvergrößerung eines Teiles des Hohlrades mit einem Druckring;
- Fig. 3: eine Ausschnittsvergrößerung eines Druckringes zwischen einem Sonnenrad und einem Planetenrad;
- Fig. 4: einen Schnitt durch das erfindungsgemäße Planetengetriebe in einer ersten Montagestufe und
- Fig. 5: einen Schnitt durch das erfindungsgemäße Planetengetriebe in einer zweiten Montagestufe.

Da das Planetengetriebe grundsätzlich von bekannter Bauart ist, wird es nachfolgend nur kurz beschrieben, wobei lediglich auf die erfindungsgemäßen Teile näher eingegangen wird.

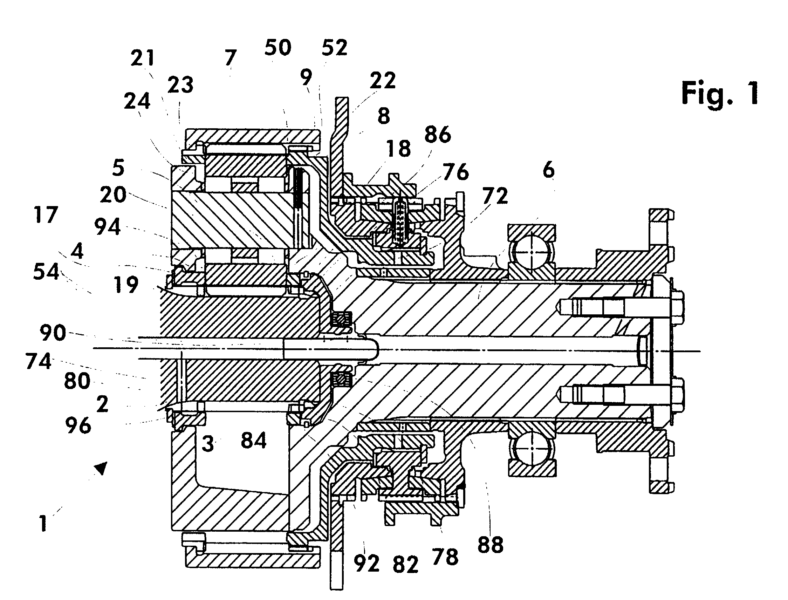

In der Fig. 1 ist bei einem Planetengetriebe 1 am Ende eine Antriebswelle 2, die im allgemeinen die Hauptwelle eines Getriebes ist, mit einer Sonnenradverzahnung 3 ausgebildet. Um die Sonnenradverzahnung 3 herum sind mehrere Planetenräder 4 angeordnet, die jeweils auf Bolzen 5 gelagert sind, die wiederum an einem Planetenträger 6 befestigt sind, sofern sie mit dem Planetenträger 6 nicht einstückig sind. Die Planetenräder 4 sind von einem Hohlrad 7 mit einer Innenverzahnung 50 umgeben. Das Sonnenrad 1, die Planetenräder 4 und die Verzahnung des Hohlrades 7 sind jeweils abwechselnd schräg verzahnt.

Über eine Kupplungsverzahnung 52, die im allgemeinen Teil einer Verlängerung der Innenverzahnung 50 des Hohlrades 7 ist, ist das Hohlrad 7 mit einem Hohlradträger 8 verbunden. Auf der in der Zeichnung rechten Seite stellt ein Sicherungsring 9, der in einer Umfangsnut in der inneren Umfangswand des Hohlrades 7 liegt, eine axiale Fixierung dar.

Im Bereich des Sonnenrades 1 sind an beiden Seiten der Planetenräder 4 Druckringe 17 und 18 angeordnet, die mit einer Innenverzahnung 54 in die Sonnenradverzahnung eingreifen.

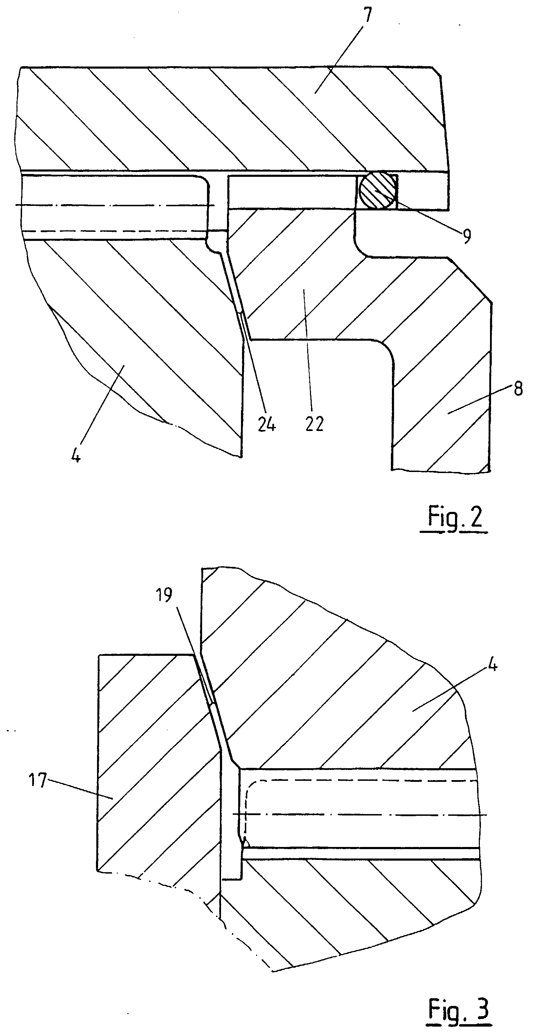

Die beiden Druckringe 17 und 18 besitzen dabei eine derartige Höhe bzw. einen derartigen Radius, daß sie mit Bereichen, die Anlaufflächen 19 und 20 bilden, bis in die Radkörper der Planetenräder 4 ragen, d. h. bis in die Bereiche der nichtverzahnten Teile der Planetenräder 4. Diese Ausgestaltung ist aus der Fig. 3 deutlicher ersichtlich. Auf diese Weise stellen die beiden Druckringe 17 und 18, je nach Auftreten der Axialkraftrichtung, jeweils alternativ seitliche Führungen mit der entsprechenden Anlauffläche 19 oder 20 dar. Wie weiterhin aus der Fig. 3 auch ersichtlich ist, sind die Anlaufflächen 19 bzw. 20 zwischen dem Druckring 17 bzw. 18 und den Planetenrädern 4 schräg bzw. leicht konisch von dem verzahnten Teil aus nach außen sich erweiternd ausgeführt, wobei gegebenenfalls auch eine ballige Ausgestaltung vorgesehen sein kann.

In gleicher Weise werden die Axialkräfte zwischen dem Hohlrad 7 und den Planetenrädern 4 durch Druckringe 21 und 22 aufgenommen. Der Druckring 21 ist dabei in der Zeichnung auf der linken Seite, d. h. auf der von dem Hohlradträger 8 abgewandten Seite, von der rechten Seite her in die Innenverzahnung des Hohlrades 7 einschiebbar. Hierzu ist der Druckring 21 entsprechend auch mit einer Außenverzahnung versehen, wobei er auf seiner linken, d. h. auf seiner Außenseite, an einer Stufe 23 des Hohlrades 7 anliegt.

Der auf der anderen Seite angeordnete Druckring 22 ist in bzw. an dem Hohlradträger 8 integriert. Hierzu ist er an seinem äußeren Umfangsbereich auf der zu den Planetenrädern 4 gerichteten Seite entsprechend so ausgestaltet, daß er, zusammen mit den entsprechend gegenüberliegenden Bereichen der Seitenwände der Planetenräder 4, eine Anlauffläche 24 bildet.

Zwischen dem Planetenträger 6 und der Antriebswelle 2 ist ein Deckel 72 angeordnet. Der Deckel 72 preßt einen im Durchmesser veränderbaren, elastischen Stütz- oder Sprengring 74 nach radial innen zusammen, so daß dessen Durchmesser reduziert wird. Dadurch kommt eine Kraftaufnahmefläche 76 am Sprengring 74 mit einer Kraftaufnahmefläche 78 in einer Vertiefung 80 der Antriebswelle in Kontakt. Die von der Schrägverzahnung verursachte Axialkraft wird vom Planetenrad 4 auf den Druckring 18 übertragen. Der Druckring 18 überträgt die Axialkraft auf den Sprengring 74. An den Kraftaufnahmeflächen 76 und 78 wird die Axialkraft dann schließlich auf die Antriebswelle 2 übertragen. Diese Kraftaufnahmeflächen 76 und 78 können eine konische Kontur aufweisen.

Der Deckel 72 weist einen zylindrischen Innendurchmesser 82 auf, auf dem der Sprengring 74 im zusammengedrückten Zustand gleitet. Dieser Durchmesser 82 dient für den Sprengring als eine axialkraftneutrale Aufnahme der Haltekraft, d. h. eine Axialkraft aus der Schrägverzahnung wird von dem Sprengring 74 nicht auf den Deckel 72 übertragen.

Der Deckel 72 weist an seiner zur Antriebswelle 2 gerichteten Seite eine schräge Fläche 84 auf, die mit einer schrägen Fläche 86 am Sprengring 74 korrespondiert. Wenn die beiden Flächen 84 und 86 axial aneinander vorbeigleiten, wird der Durchmesser des Sprengrings 74 verkleinert, bzw. in umgekehrter Richtung vergrößert.

Zwischen dem Deckel 72 und dem Planetenträger 6 ist eine Axiallagerung 88 vorgesehen. Diese Axiallagerung dient dem Ausgleich von Relativdrehzahlen zwischen der Antriebswelle 2 und dem Planetenträger 6 bzw. der Sonnenradverzahnung 3 und dem Planetenträger 6. Axialbewegungen des Planetenträgers 6 können mit elastischen Elementen, beispielsweise mit Tellerfedern 90 ausgeglichen werden. Der Dekel 72 wird im Planetenträger axial von einem Sprengring 92 formschlüssig gehalten, so daß der Deckel 72 bei der Demontage des Planetengetriebes 1 mitbewegt wird und den Sprengring 74 wieder über die schrägen Flächen 84 und 86 einen größeren Durchmesser einnehmen läßt.

Zwischen dem Planetenträger 6 und den Planetenrädern 4 muß auf der dem Planetenträger 6 entgegengesetzten Seite der Planetenräder 4 ein ausreichendes Axialspiel 94 zur Verfügung stehen, damit bei der Montage eine Einschaltüberdeckung zwischen Deckel 72 und Sprengring 74 erzielt wird und damit der Sprengring 74 in seinem Durchmesser reduziert werden kann. Zwischen der Antriebswelle 2 und dem Druckring 17 kann eine Einstellscheibe 96 vorgesehen sein zum Einstellen der Planetenräder axial zu den Druckringen 17, 18.

Die Fig. 2 zeigt, daß die Axialkräfte zwischen dem Hohlradträger 8 und den Planetenrädern 4 durch einen Druckring 22 aufgenommen werden. Der Druckring 22 ist in bzw. an dem Hohlradträger 8 integriert. Hierzu ist er an seinem äußeren Umfangsbereich auf der zu den Planetenrädern 4 gerichteten Seite entsprechend so ausgestaltet, daß er, zusammen mit den entsprechend gegenüberliegenden Bereichen der Seitenwände der Planetenräder 4, eine Druckflächen-Paarung 24 bildet.

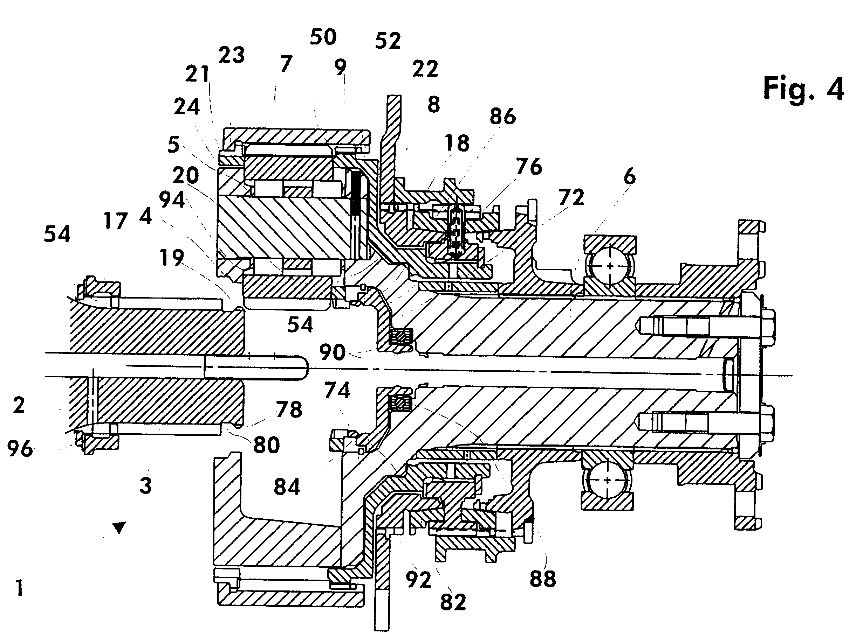

Die Fig. 4 bis Fig. 5 zeigen verschiedene Stufen des Montageverfahrens.
In allen Fig. sind für gleiche Bauteile gleiche Bezugszeichen verwendet.

Die Fig. 4 zeigt das vormontierte Planetengetriebe 1, während die Sonnenverzahnung 3 an der Antriebswelle in das Planetengetriebe 1 eingeschoben wird. Der Sprengring 74 wird unter axialer Vorspannung zwischen Druckring 18 und Deckel 72 gehalten. Der Sprengring 74 nimmt dabei einen Durchmesser ein, der größer ist als der Durchmesser im montierten Endzustand nach Fig. 1. Deshalb liegt der Sprengring 74 nicht an dem zylindrischen Innendurchmesser 82 des Deckels 72 an, sondern seine schräge Fläche 86 liegt an der schrägen Fläche 84 des Deckels 72 an. Die Verzahnung der Planetenräder 4 wird in die Sonnenradverzahnung 3 eingepaßt.

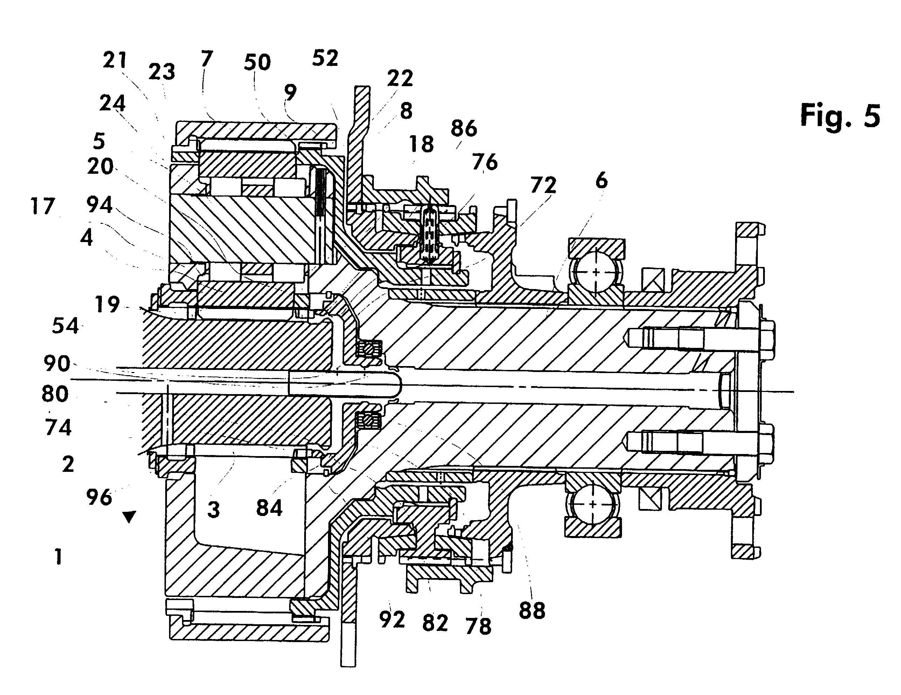

In Fig. 5 stößt der Druckring 17 an die Planetenräder 4 an, wodurch die Planetenräder und damit der Druckring 18 in Richtung auf den Deckel 72 verschoben werden. Diese Axialverschiebung läßt den Sprengring 74 mit seiner schrägen Fläche 86 an der schrägen Fläche 84 des Deckels 72 entlanggleiten, wodurch sein Durchmesser reduziert wird. Bei fortschreitender Durchmesserreduzierung greift der Sprengring 74 mehr und mehr in die Vertiefung 80 der Antriebswelle ein und die Kraftaufnahmeflächen 76 und 78 gelangen in Kontakt zueinander. Schließlich liegt der Sprengring 74 in dem zylindrischen Innendurchmesser 82 an und der Druckring 18 ist axial zur Antriebswelle fixiert, siehe Fig. 1.

Bei der Demontage läuft der beschriebene Prozeß in umgekehrter Reihenfolge ab. Der Sprengring 74 verläßt unter Durchmesserzunahme die Vertiefung 80, so daß die axiale Fixierung aufgehoben wird und die Antriebswelle 2 aus dem Planetengetriebe 1 entfernt werden kann.

### Bezugszeichen

- 1: Planetengetriebe
- 2: Antriebswelle
- 3: Sonnenradverzahnung
- 4: Planetenräder
- 5: Bolzen
- 6: Planetenträger
- 7: Hohlrad
- 8: Hohlradträger
- 9: Sicherungsring
- 17: Druckring
- 18: Druckring
- 19: Druckflächen-Paarung
- 20: Druckflächen-Paarung
- 21: Druckring
- 22: Druckring
- 24: Druckflächen-Paarung
- 50: Innenverzahnung
- 52: Kupplungsverzahnung
- 54: Innenverzahnung
- 72: Deckel
- 74: Sprengring
- 76: Kraftaufnahmefläche
- 78: Kraftaufnahmefläche
- 80: Vertiefung
- 82: zylindrischer Innendurchmesser
- 84: schräge Fläche
- 86: schräge Fläche
- 88: Axiallagerung
- 90: Tellerfeder
- 92: Sprengring
- 94: Axialspiel
- 96: Einstellscheibe

## Patentansprüche

1. Planetengetriebe (1) mit Schrägverzahnung, insbesondere für Kraftfahrzeuge, mit einer an einer Antriebswelle (2) angeordneten Sonnenradverzahnung (3), mehreren in einem Planetenträger (6) gelagerten Planetenrädern (4) und einem die Planetenräder (4) umschließenden Hohlrad (7), das mit einem Hohlradträger (8) verbunden ist, mit Druckringen (17, 18, 21, 22) zwischen der Antriebswelle (2) und den Planetenrädern (4) und zwischen den Planetenrädern (4) und dem Hohlrad (7) zur Übertragung von Axialkräften aus der Schrägverzahnung, dadurch **gekennzeichnet**, daß zwischen der Antriebswelle (2) und dem Planetenträger (6) eine Vorrichtung (72, 74, 80) vorgesehen ist, die aus einem Deckel (72), einem am Deckel (72) angeordneten, im Durchmesser veränderbaren Sprengring (74) und einer an der Antriebswelle (2) vorgesehenen Vertiefung (80) besteht, in die der im Durchmesser veränderte Sprengring (74) im montierten Zustand eingreift und wenigstens Teile dieser Vorrichtung die in Richtung auf den Planetenträger (6) gerichtete Axialkraft der Schrägverzahnung aufnehmen und in der Antriebswelle (2) binden.

2. Planetengetriebe (1) nach Anspruch 1, dadurch **gekennzeichnet**, daß der Deckel (72) und der Sprengring (74) schräge Flächen (84, 86) aufweisen, über die bei der Montage eine Durchmesserreduzierung des Sprengringes (74) erzielbar ist.

3. Planetengetriebe (1) nach einem der Ansprüche 1 oder 2, dadurch **gekennzeichnet**, daß an der Vertiefung (80) der Antriebswelle (2) und an dem Sprengring (74) Kraftaufnahmeflächen (76, 78) vorgesehen sind, über welche die Axialkräfte übertragbar sind.

4. Planetengetriebe (1) nach Anspruch 3, dadurch **gekennzeichnet**, daß die Kraftaufnahmeflächen (76, 78) konisch sind.

5. Planetengetriebe (1) nach einem der Ansprüche 1 bis 4, dadurch **gekennzeichnet**, daß zwischen Deckel (72) und Planetenträger (6) eine Axiallagerung (88) zum Ausgleich von Relativdrehzahlen zwischen Antriebswelle (2) und Planetenträger (6) vorgesehen ist.

6. Planetengetriebe (1) nach Anspruch 5, dadurch **gekennzeichnet**, daß zwischen Deckel (72) und Axiallagerung (88) einerseits und zwischen Axiallagerung (88) und Planetenträger (6) andererseits elastische Elemente (90) vorgesehen sind zum Ausgleich der Axialbewegung des Planetenträgers (6).

7. Planetengetriebe (1) nach Anspruch 6, dadurch **gekennzeichnet**, daß die elastischen Elemente (90) Tellerfedern sind.

8. Planetengetriebe (1) nach einem der Ansprüche 1 bis 7, dadurch **gekennzeichnet**, daß der Deckel (72) formschlüssig im Planetenträger (6) gehalten ist.

9. Verfahren zur Montage eines Planetengetriebes (1) nach wenigstens einem der Ansprüche 1 bis 8, dadurch **gekennzeichnet**, daß der Sprengring (74) von dem im Planetenträger (6) vorgesehenen Deckel (72) über die schrägen Flächen (84, 86) in seinem Durchmesser reduziert wird, wobei der Sprengring (74) in die Vertiefung (80) der Antriebswelle (2) gedrückt wird und danach die Kraftaufnahmeflächen (76, 78) von Sprengring (74) und Vertiefung (80) aneinander anliegen.

## Claims

1. Planetary gear unit (1) with helical toothing, particularly for motor vehicles, the said gear unit having a sun wheel toothing system (3) disposed on a drive shaft (2), a number of planet wheels (4) mounted in a planet-carrier (6) and a ring gear (7) which encloses the planet wheels (4) and is connected to a ring gear-carrier (8), with thrust rings (17, 18, 21, 22) between the drive shaft (2) and the planet wheels (4) and between the planet wheels (4) and the ring gear (7) for transmitting axial forces from the helical toothing system, **characterised** in that there is provided, between the drive shaft (2) and the planet-carrier (6), a device (72, 74, 80) which consists of a cover (72), a spring ring (74) of variable diameter disposed on the cover (72) and a recess (80) which is provided on the drive shaft (2) and in which the spring ring (74), which is varied in diameter, engages in the assembled condition, and at least parts of the said device absorb, and contain in the drive shaft (2), that axial force of the helical toothing system which is directed in the direction of the planet-carrier (6).

2. Planetary gear unit (1) according to claim 1, **characterised** in that the cover (72) and the spring ring (74) have oblique faces (84, 86) via which a reduction in diameter of the spring ring (74) can be achieved on assembly.

3. Planetary gear unit (1) according to one of claims 1 or 2, **characterised** in that force-absorbing faces (76, 78), via which the axial forces can be transmitted, are provided on the recess (80) in the drive shaft (2) and on the spring ring (74).

4. Planetary gear unit (1) according to claim 3, **characterised** in that the force-absorbing faces (76, 78) are conical.

5. Planetary gear unit (1) according to one of claims 1 to 4, **characterised** in that an axial bearing system (88) for compensating for relative rotational speeds between the drive shaft (2) and the planet-carrier (6) is provided between the cover (72) and the said planet-carrier (6).

6. Planetary gear unit (1) according to claim 5, **characterised** in that elastic elements (90) are provided between the cover (72) and axial bearing system (88) on the one hand, and between the axial bearing system (88) and planet-carrier (6) on the other, for compensating for the axial movement of the said planet-carrier (6).

7. Planetary gear unit (1) according to claim 6, **characterised** in that the elastic elements (90) are spring washers.

8. Planetary gear unit (1) according to one of claims 1 to 7, **characterised** in that the cover (72) is held in the planet-carrier (6) in a form-locking manner.

9. Method of assembling a planetary gear unit (1) according to at least one of claims 1 to 8, **characterised** in that the spring ring (74) is reduced in its diameter by the cover (72) provided in the planet-carrier (6), via the oblique faces (84, 86), the spring ring (74) being pressed into the recess (80) in the drive shaft (2), whereupon the force-absorbing faces (76, 78) of the spring ring (74) and recess (80) abut against one another.

## Revendications

1. Engrenage planétaire (1) à denture hélicoïdale notamment pour véhicules automobiles, comportant un engrenage à roue solaire (3) disposé sur un arbre menant (2), plusieurs roues planétaires (4) logées dans un support planétaire (6) et une roue à denture intérieure (7) entourant les roues planétaires (4) et reliée à un support de roue à denture intérieure (8), avec des bagues de butée (17, 18, 21, 22) entre l'arbre menant (2) et les roues planétaires (4) et entre les roues planétaires (4) et la roue à denture intérieure (7) pour recevoir les forces axiales qui résultent de la denture hélicoïdale, **caractérisé en ce** qu'entre l'arbre menant (2) et le support planétaire (6) est prévu un dispositif (72, 74, 80) qui est constitué par un couvercle (72), une rondelle ressort (74) à diamètre variable disposée sur le couvercle, et un évidement (80) prévu dans l'arbre menant (2), dans lequel la rondelle ressort (74) à diamètre variable s'introduit lorsqu'elle est montée et qu'au moins des parties de ce dispositif reçoivent les forces axiales dirigées vers l'engrenage à denture hélicoïdale et les retiennent dans l'arbre menant (2).

2. Engrenage planétaire (1) à denture hélicoïdale selon la revendication 1, **caractérisé en ce que** le couvercle (72) et la rondelle ressort (74) présentent des surfaces inclinées (84, 86) au moyen desquelles, lors du montage, une réduction du diamètre de la rondelle ressort peut être réalisée.

3. Engrenage planétaire (1) à denture hélicoïdale selon l'une des revendications 1 ou 2, **caractérisé en ce que** sur l'évidement (80) de l'arbre menant (2) et sur la rondelle ressort (74) sont prévues des surfaces (76, 78), recevant les forces par lesquelles les forces axiales peuvent être transmises.

4. Engrenage planétaire (1) à denture hélicoïdale selon la revendication 3, **caractérisé en ce que** les surfaces (76, 78) recevant les forces sont coniques.

5. Engrenage planétaire (1) à denture hélicoïdale selon l'une des revendications 1 à 4, **caractérisé en ce** qu'entre le couvercle (72) et le support planétaire (6), un coussinet axial (88) est prévu pour la compensation des vitesses de rotation relatives entre l'arbre menant (2) et le support planétaire (6).

6. Engrenage planétaire (1) à denture hélicoïdale selon la revendication 5, **caractérisé en ce** qu'entre le couvercle (72) et le coussinet axial (88) d'une part, et entre le coussinet axial (88) et le support planétaire (6) d'autre part, des éléments élastiques (90) sont prévus pour la compensation du mouvement axial du support planétaire (6).

7. Engrenage planétaire (1) à denture hélicoïdale selon la revendication 6, caractérisé e n c e q u e les éléments élastiques (90) sont des ressorts diaphragmes.

8. Engrenage planétaire (1) à denture hélicoïdale selon l'une des revendications 1 à 7, **caractérisé en ce que** le couvercle (72) est maintenu par fermeture géométrique dans le support planétaire (6).

9. Procédé pour le montage d'un engrenage planétaire (1) selon au moins l'une des revendications 1 à 8, **caractérisé en ce que** la rondelle ressort (74) du couvercle (72) prévu dans le support planétaire (6) est réduit dans son diamètre par les surfaces inclinées (84, 86), la rondelle ressort (74) étant pressée dans l'évidement (80) de l'arbre menant (2) suite à quoi les surfaces (76, 78) de la rondelle ressort (74) et de l'évidement (80) recevant les forces se trouvent en contact l'une avec l'autre.
